# EUROPÄISCHE PATENTSCHRIFT

(11) **EP 1 409 910 B1**
(45) Veröffentlichungstag und Bekanntmachung des Hinweises auf die Patenterteilung: **07.09.2005**
(21) Anmeldenummer: 02745430.5
(22) Anmeldetag: 15.07.2002
(51) Int. Cl.: F16L 37/40, F16L 37/44, B60T 11/26

(54) **HYDRAULIKFLUIDBEHÄLTER FÜR EINE HYDRAULISCHE FAHRZEUGBREMSANLAGE**
HYDRAULIC FLUID RESERVOIR FOR A HYDRAULIC VEHICLE BRAKE SYSTEM
RESERVOIR POUR FLUIDES HYDRAULIQUES CONCU POUR UN DISPOSITIF DE FREINAGE D'UN VEHICULE

(30) Priorität: 23.07.2001 DE 10135793
(43) Veröffentlichungstag der Anmeldung: 21.04.2004
(73) Patentinhaber: Lucas Automotive GmbH, 56070 Koblenz (DE)
(72) Erfinder: LANGE, Hans-Christoph, 56283 Nörtershausen (DE)
(74) Vertreter: Beyer, Andreas
(86) Internationale Anmeldenummer: PCT/EP2002/007851
(87) Internationale Veröffentlichungsnummer: WO 2003/012331

(56) Entgegenhaltungen:
- EP-A- 0 340 186
- DE-A- 1 530 757
- DE-A- 3 912 110
- GB-A- 2 114 246

## Beschreibung

Die Erfindung betrifft einen Hydraulikfluidbehälter für eine hydraulische Fahrzeugbremsanlage, mit wenigstens einem Anschlußstutzen, in dem ein Ventilglied verschiebbar geführt ist, das in einer ersten Stellung, in die es federnd vorgespannt ist, den Anschlußstutzen absperrt, und das in einer zweiten Stellung den Anschlußstutzen freigibt. Ein solcher Hydraulikfluidbehälter ist aus der DE 39 12 110 A1 bekannt.

Hydraulikfluidbehälter dieser Art werden in Fahrzeugen mit einer hydraulischen Bremsanlage als Bremsflüssigkeitsbehälter eingesetzt und stehen bei betriebsfähiger Fahrzeugbremsanlage in fluidleitender Verbindung mit einem Hauptzylinder. Unter bestimmten Umständen, beispielsweise durch einen Unfall oder bei einer Reparatur des Fahrzeugs, kann es jedoch vorkommen, dass der Bremsflüssigkeitsbehälter von dem Hauptzylinder getrennt wird. Dabei besteht die Gefahr, dass die in der Regel aus hochgradig toxischen Polyglykolverbindungen bestehende Bremsflüssigkeit aus dem Bremsflüssigkeitsbehälter austritt und in die Umwelt gelangt. Darüber hinaus kann sich auslaufende Bremsflüssigkeit bei einer Berührung mit erhitzten Motorteilen entzünden und einen Fahrzeugbrand auslösen. Aus diesen Gründen weisen derartige Bremsflüssigkeitsbehälter üblicherweise ein Auslaufschutzventil auf, das die fluidleitende Verbindung zwischen dem Bremsflüssigkeitsbehälter und dem Hauptzylinder freigibt, solange der Bremsflüssigkeitsbehälter und der Hauptzylinder zu einer Baugruppe verbunden sind, und das den Behälter verschließt, sobald der Bremsflüssigkeitsbehälter, von dem Hauptzylinder getrennt wird.

Bei dem aus der DE 39 12 110 A1 bekannten Bremsflüssigkeitsbehälter weist ein Auslaufschutzventil ein in einem Anschlußstutzen des Bremsflüssigkeitsbehälters angeordnetes Ventilglied mit einem Schließkörper und einem Betätigungselement auf. Wenn der Bremsflüssigkeitsbehälter mit dem Hauptzylinder einer Fahrzeugbremsanlage verbunden ist, stützt sich das Betätigungselement am Hauptzylindergehäuse ab und hält so das Ventilglied entgegen der Kraft einer Feder, die sich an einer im Inneren des Bremsflüssigkeitsbehälter angeordneten Abstützplatte abstützt, in seiner geöffneten Stellung. Bei einer Trennung des Bremsflüssigkeitsbehälters von dem Hauptzylinder gerät der Schließkörper durch die Vorspannkraft der Feder in Anlage an einen an dem Anschlußstutzen ausgebildeten Dichtsitz, wodurch der Bremsflüssigkeitsbehälter verschlossen wird. Dieser bekannte Bremsflüssigkeitsbehälter hat den Nachteil, dass das Ventilglied von der Innenseite des Bremsflüssigkeitsbehälters in den Anschlußstutzen eingebracht werden muß. Die Feder und die Abstützplatte für die Feder müssen dann in einem zweiten Arbeitsgang im Inneren des Bremsflüssigkeitsbehälters montiert werden, nachdem das Ventilglied in seiner Position in dem Anschlußstutzen angeordnet ist. Die Montage des Ventilgliedes sowie der Feder und der Abstützplatte ist demnach bei diesem bekannten Bremsflüssigkeitsbehälter aufwendig und daher teuer.

Der Erfindung liegt die Aufgabe zugrunde, einen Hydraulikfluidbehälter der eingangs beschriebenen Art mit einem schnell und einfach zu montierenden Auslaufschutzventil bereitzustellen.

Diese Aufgabe ist erfindungsgemäß durch einen Hydraulikfluidbehälter mit den Merkmalen des Anspruchs 1 gelöst. Zur Montage wird das Ventilglied mit dem wenigstens einen in Radialrichtung elastischen Rastelement in einfacher Weise von außen in den Anschlußstutzen des Hydraulikfluidbehälters eingeführt. Dabei tritt eine elastische, radial nach innen gerichtete Verformung des wenigstens einen Rastelements auf. Sobald sich das Ventilglied in einer vorbestimmten Position in dem Anschlußstutzen befindet, sorgen die aus dieser elastischen Verformung resultierenden Rückstellkräfte für eine radial nach außen gerichtete Rückstellung des Rastelements, so dass das Rastelement in der mindestens einen Ausnehmung verrastet, die an der inneren Seitenwandung des Anschlußstutzens ausgebildet ist.

Im montierten Zustand ist das Ventilglied zwischen seiner ersten Stellung, in der es den Anschlußstutzen absperrt und seiner zweiten Stellung, in der es den Anschlußstutzen freigibt, in dem Anschlußstutzen verschiebbar, wobei es durch eine federnde Vorspannkraft in seine ersten Stellung gedrängt wird. Die an der inneren Seitenwandung des Anschlußstutzens ausgebildete Ausnehmung wirkt dabei als Anschlag, der die erste Stellung des Ventilgliedes festlegt. Dieser Anschlag begrenzt im Zusammenwirken mit dem wenigstens einen Rastelement die Verschiebung des Ventilgliedes in dem Anschlußstutzen und verhindert, dass das Ventilglied infolge der federnden Vorspannkraft über seine erste Stellung hinaus in dem Anschlußstutzen verschoben wird.

Anstelle der an der inneren Seitenwandung des Anschlußstutzens ausgebildeten Ausnehmung kann auch ein an dieser inneren Seitenwandung ausgebildeter Rastvorsprung vorhanden sein. Bei der Montage verrastet dann das wenigstens eine Rastelement mit dem Rastvorsprung, und der Rastvorsprung wirkt im montierten Zustand des Ventilgliedes als der die erste Stellung des Ventilgliedes festlegende Anschlag. Beide genannten Ausführungsformen des erfindungsgemäßen Hydraulikfluidbehälters weisen den Vorteil auf, dass das Ventilglied sehr einfach und schnell in dem Anschlußstutzen des Hydraulikfluidbehälters zu montieren ist und gleichzeitig einen sicheren Auslaufschutz gewährleistet.

Gemäß einer Weiterbildung der Erfindung erstreckt sich der Anschlußstutzen in den Hydraulikfluidbehälter, wobei der sich in dem Hydraulikfluidbehälter befindende Teil des Anschlußstutzens im wesentlichen den gleichen Innendurchmesser hat wie ein aus dem Hydraulikfluidbehälter herausragender Teil des Anschlußstutzens, und wobei die zumindest eine Ausnehmung für das wenigstens eine Rastelement vorzugsweise in dem sich in dem Hydraulikfluidbehälter befindenden Teil des Anschlußstutzens gebildet ist. Bei einer derartigen Anordnung ist das Ventilglied über das wenigstens eine in Radialrichtung elastische Rastelement im Inneren des Hydraulikfluidbehälters verrastet. Die Rastverbindung ist dann gut gegen Beschädigung geschützt, so dass auch bei einer auf den Hydraulikfluidbehälter wirkenden mechanischen Beanspruchung, beispielsweise durch einen Unfall, die Gefahr gering ist, dass das Auslaufschutzventil beschädigt oder zerstört wird. Der sich im Hydraulikfluidbehälter befindende Teil des Anschlußstutzens braucht nicht genau denselben Innendurchmesser aufzuweisen wie der aus dem Hydraulikfluidbehälter herausragende Teil, sondern er kann etwas kleiner oder auch etwas größer sein. Zu achten ist lediglich darauf, dass der Verformungsweg, den das in Radialrichtung elastische Rastelement ausführen kann, für ein sicheres Verrasten in der Ausnehmung des Anschlußstutzens noch ausreicht.

Das Ventilglied kann einen ersten und einen zweiten Abschnitt aufweisen. In dem ersten Abschnitt ist dann das zumindest eine Rastelement angeordnet und der zweite Abschnitt erstreckt sich in Richtung der Öffnung des Anschlußstutzens und dient als Betätigungsstößel für das Ventilglied. In seiner Betätigungsstellung drängt der Betätigungsstößel das Ventilglied entgegen der federnden Vorspannkraft in dessen zweite Stellung. Ist der Betätigungsstößel dagegen unbetätigt, wird das Ventilglied infolge der federnden Vorspannkraft in seine erste Stellung verschoben. Üblicherweise stützt sich der Betätigungsstößel so auf dem Gehäuse eines Hauptzylinders ab, dass er seine Betätigungsstellung einnimmt, solange der Hydraulikfluidbehälter mit dem Hauptzylinder verbunden ist. Das Ventilglied befindet sich dann in seiner zweiten Stellung und gibt den Anschlußstutzen und damit eine Fluidverbindung zwischen dem Hydraulikfluidbehälter und dem Hauptzylinder frei. Bei einer Trennung des Hydraulikfluidbehälters von dem Hauptzylinder wird der Betätigungsstößel freigegeben und das Ventilglied durch die auf es wirkende federnde Vorspannkraft in seine erste Stellung verschoben, in der es den Anschlußstutzen absperrt. Durch diese Ausgestaltung des Ventilgliedes wird auf einfache Art und Weise eine sichere und zuverlässige Funktion des Ventils gewährleistet.

Vorzugsweise ist der erste Abschnitt des Ventilgliedes hohlzylindrisch und nimmt ein Ende einer das Ventilglied vorspannenden Feder auf, deren anderes Ende sich an dem in dem Hydraulikfluidbehälter befindenden Teil des Anschlußstutzens abstützt, beispielsweise an der Seitenwand des Anschlußstutzens. Eine derartige Anordnung ist besonders einfach und kostengünstig zu fertigen und zu montieren und gewährleistet eine sichere Halterung der Feder in dem Anschlußstutzen. In der ersten Stellung des Ventilgliedes wird die Vorspannkraft der Feder über das Rastelement auf den Anschlag übertragen, der durch die Ausnehmung an der inneren Seitenwandung des Anschlußstutzens gebildet ist, während der Vorspannkraft in der zweiten Stellung des Ventilgliedes eine über den Betätigungsstößel aufgebrachte Kraft entgegenwirkt.

Gemäß einer Ausführungsform der Erfindung stützt sich die Feder an einer teilweise durchbrochenen Stirnwand ab, die ein Ende des sich in dem Hydraulikfluidbehälter befindenden Teil des Anschlußstutzens bildet. Durch die in der Stirnwand ausgebildeten Durchbrechung kann Hydraulikfluid aus dem Hydraulikfluidbehälter in den Anschlußstutzen und aus dem Behälter hinaus fließen, wenn sich das Ventilglied in seiner zweiten Stellung befindet.

Gemäß einer weiteren Ausführungsform des erfindungsgemäßen Hydraulikfluidbehälters stützt sich die Feder an einer Stirnwand ab, die den sich in dem Hydraulikfluidbehälter befindenden Teil des Anschlußstutzens verschließt, und die mit dem Rastelement zusammenwirkende Ausnehmung in der inneren Seitenwandung des Anschlußstutzens ist als Durchbrechung ausgeführt. Diese Ausgestaltung ist vorteilhaft, da sich die Feder an der durchgängigen und somit stabilen Stirnwand gut abstützen kann und die in der Seitenwandung des Anschlußstutzens ausgebildete Durchbrechung bei der Montage des Ventilgliedes ein besonders sicheres und einfaches Verrasten des in Radialrichtung elastischen Rastelements ermöglicht. Befindet sich das Ventilelement in seiner zweiten Stellung, kann das Hydraulikfluid im Hydraulikfluidbehälter durch die Durchbrechung in der Seitenwand des Anschlußstutzens in den Anschlußstutzen fließen und umgekehrt.

Die Ausbildung einer Dichtung, die den Anschlußstutzen des Hydraulikfluidbehälters in der ersten Stellung des Ventilgliedes abdichtet, kann auf verschiedene Weise erfolgen. Dabei ist zu berücksichtigen, dass zwischen dem Fluid in dem Hydraulikfluidbehälter und dem Anschlußstutzen kein nennenswertes Druckgefälle vorhanden ist und daher die Anforderungen an eine Dichtung geringer sind, als beispielsweise in einem unter Druck stehenden System. Gemäß einer ersten Ausführungform weist das Ventilglied auf seiner Außenseite einen in Radialrichtung geringfügig vorspringenden, ringförmigen Dichtbund auf, der in der ersten Stellung des Ventilgliedes mit einem geringfügig radial nach innen ragenden, ringförmigen Dichtsitz zusammenwirkt, der an der Innenfläche des Anschlußstutzens vorhanden ist. Der ringförmige Dichtbund kann materialeinheitlich mit dem Ventilglied, und der ringförmige Dichtsitz kann materialeinheitlich mit dem Anschlußstutzen ausgebildet sein. Der Dichtbund und der Dichtsitz werden bei der Montage des Ventilgliedes aneinander vorbei geführt, so dass sie jeweils so dimensioniert und elastisch verformbar sein müssen, dass sie dabei nicht beschädigt werden. Während sich der Dichtbund in der zweiten Stellung des Ventilgliedes in einer von dem Dichtsitz abgehobenen Position befindet, gerät er in der ersten Stellung des Ventilgliedes in Anlage an den Dichtsitz, so dass infolge dessen der Anschlußstutzen des Hydraulikfluidbehälters abgedichtet wird. Eine derartig hergestellte Dichtung ist kostengünstig zu fertigen und gewährleistet eine sichere Abdichtung des Hydraulikbehälters.

Gemäß einer zweiten Ausführungsform weist das Ventilglied auf seiner Außenseite einen in Radialrichtung geringfügig vorspringenden, ringförmigen Dichtbund auf, der die Innenfläche des Anschlußstutzens berührt, wobei der ringförmige Dichtbund durch eine O-Ringdichtung gebildet ist. Ein derart ausgestaltetes Ventilglied ist besonders einfach und kostengünstig herzustellen, da an der Innenfläche des Anschlußstutzens aufgrund der elastischen Vorspannkraft der O-Ringdichtung kein Dichtsitz angeordnet sein muß. Darüber hinaus ist die O-Ringdichtung in Radialrichtung ausreichend elastisch verformbar, so dass sie bei der Montage des Ventilgliedes nicht beschädigt wird.

Vorzugsweise ist der ringförmige Dichtbund zwischen dem ersten Abschnitt und dem zweiten Abschnitt des Ventilgliedes angeordnet.

Auch das an dem Ventilglied ausgebildete wenigstens eine Rastelement kann auf verschiedene Weise ausgestaltet sein. Gemäß einer Ausführungsform des erfindungsgemäßen Hydraulikfluidbehälters ist das bzw. jedes elastische Rastelement durch eine am Ventilglied befestigte Zunge gebildet, die um eine zur Mittelachse des Ventilgliedes parallele Achse schwenkbar ist. Beim Montieren des Ventilgliedes wird diese Zunge radial nach innen gedrückt, um ein Einführen des Ventilgliedes in den Anschlußstutzen des Hydraulikfluidbehälters zu gestatten. Wenn das Ventilglied seine vorbestimmte Position in dem Anschlußstutzen erreicht hat, gerät die Zunge infolge der aus ihrer elastischen Verformung resultierenden Rückstellkräfte wieder in ihre ursprüngliche Stellung und verrastet sicher mit der Ausnehmung an der inneren Seitenwandung des Anschlußstutzens.

Gemäß einer weiteren Ausführungsform des erfindungsgemäßen Hydraulikfluidbehälters ist das bzw. jedes elastische Rastelement durch eine am Ventilglied befestigte Zunge gebildet, die um eine Achse schwenkbar ist, welche tangential zur Umfangsrichtung des Ventilgliedes verläuft. Ein derartig ausgeführtes Ventilglied ist besonders montagefreundlich, da die oder jede Zunge sich beim Einführen des Ventilgliedes in den Anschlußstutzen automatisch radial nach innen verformt, so dass das Ventilglied leicht und ohne zu verkanten in den Anschlußstutzen des Hydraulikfluidbehälters eingeführt werden kann.

Vorzugsweise ist das Ventilglied ein einstückiges Kunststoffspritzgußteil. Ein solches lässt sich einfach und kostengünstig mit der erforderlichen Präzision fertigen.

Drei verschiedene Ausführungsformen des erfindungsgemäßen Hydraulikfluidbehälters werden im folgenden anhand der beigefügten schematischen Figuren näher erläutert. Es zeigt:
- Fig. 1: einen Ausschnitt eines ersten Ausführungsbeispiels eines erfindungsgemäßen Hydraulikfluidbehälters in perspektivischer Darstellung;
- Fig. 2: den in Fig. 1 gezeigten Ausschnitt des ersten Ausführungsbeispiels des erfindungsgemäßen Hydraulikfluidbehälters im Schnitt;
- Fig. 3: einen Ausschnitt eines zweiten Ausführungsbeispiels des erfindungsgemäßen Hydraulikfluidbehälters im Schnitt;
- Fig. 4: eine perspektivische Darstellung eines Ventilgliedes für ein drittes Ausführungsbeispiel des erfindungsgemäßen Hydraulikfluidbehälters.

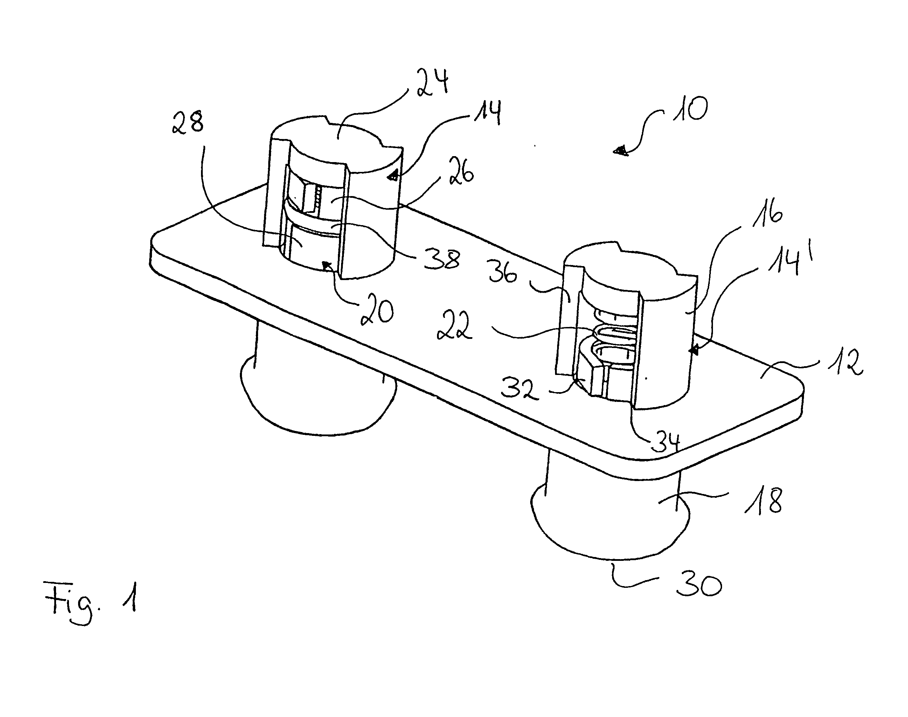

Fig. 1 zeigt einen Teil eines allgemein mit 10 bezeichneten Hydraulikfluidbehälters für eine hydraulische Fahrzeugbremsanlage, und zwar eine untere Wandung 12 sowie zwei daran angeformte zylindrische Anschlußstutzen 14, 14'. Der hier nicht dargestellte Teil des als Kunststoffspritzgußteil ausgeführten Hydraulikfluidbehälters 10 ist von einer Fachleuten bekannten Bauart und wird daher im folgenden nicht näher erläutert.

Die Anschlußstutzen 14, 14' weisen jeweils einen in dem Hydraulikfluidbehälter 10 angeordneten Teil 16 und einen aus dem Hydraulikfluidbehälter 10 herausragenden Teil 18 auf, wobei der in dem Hydraulikfluidbehälter 10 angeordnete Teil 16 hier den gleichen Innendurchmesser besitzt, wie der aus dem Hydraulikfluidbehälter 10 herausragende Teil 18.

In den Anschlußstutzen 14, 14' ist jeweils ein als einstückiges Kunststoffspritzgußteil ausgeführtes Ventilglied 20 angeordnet, das zwischen einer ersten, in den Figuren 1 bis 3 rechts dargestellten Stellung und einer zweiten, links dargestellten Stellung verschiebbar ist. Eine Feder 22, deren eines Ende sich an einer Stirnfläche 24 des in dem Hydraulikfluidbehälter 10 angeordneten Teil 16 des Anschlußstutzens 14 abstützt, spannt das Ventilglied 20 in seine erste Stellung vor.

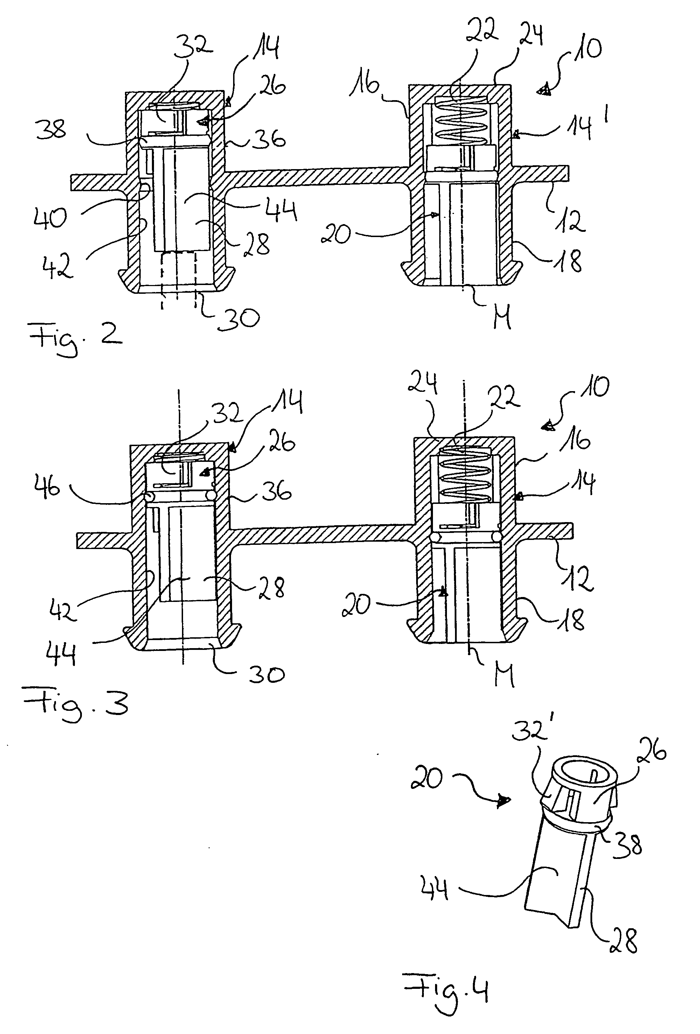

Wie auch aus Fig. 2 ersichtlich, weist das Ventilglied 20 einen hohlzylindrischen ersten Abschnitt 26 auf, der das andere Ende der Feder 22 aufnimmt. Ein zweiter Abschnitt 28 des Ventilgliedes 20 besitzt einen sternförmigen Querschnitt und erstreckt sich in Richtung einer Öffnung 30 des Anschlußstutzens 14. An dem ersten Abschnitt 26 sind zwei elastische, zungenartige Rastelemente 32 befestigt, die um eine zu einer Mittelachse M des Ventilgliedes parallele Achse schwenkbar sind und im montierten Zustand des Ventilgliedes 20 in Durchbrechungen 34 eingreifen, die in einer Seitenwandung 36 des in dem Hydraulikfluidbehälter 10 angeordneten Teils 16 des Anschlußstutzens 14 ausgebildet sind. In der ersten Stellung des Ventilgliedes 20 befinden sich die Rastelemente 32 in Anlage an der unteren Wandung 12 des Hydraulikfluidbehälters 10 und begrenzen so die Verschiebung des Ventilgliedes 20 in Richtung der Öffnung 30 des Anschlußstutzens 14. Bei dem hier dargestellten Ausführungsbeispiel bildet somit die untere Wandung 12 des Hydraulikfluidbehälters 10 einen Anschlag für die Rastelemente 32, der die erste Stellung des Ventilgliedes 20 festlegt. In der zweiten Stellung des Ventilgliedes 20 sind die Rastelemente 32 von diesem Anschlag abgehoben und in Richtung der Stirnfläche 24 des Teils 16 verschoben.

Zwischen dem ersten und dem zweiten Abschnitt 26, 28 ist an dem Ventilglied 20 ein in Radialrichtung geringfügig vorspringender Dichtbund 38 angeordnet. In der ersten Stellung des Ventilgliedes 20 wirkt der Dichtbund 38 mit einem ringförmigen Dichtsitz 40 zusammen, der von einer Innenfläche 42 des Anschlußstutzens 14 geringfügig radial nach innen ragt, so dass der Anschlußstutzen 14 abgesperrt und der Hydraulikfluidbehälter 10 gegen ein Auslaufen von Hydraulikfluid abgedichtet ist. In der zweiten Stellung des Ventilgliedes 20 ist der Dichtbund 38 von dem Dichtsitz 40 abgehoben, so dass Hydraulikfluid durch die Durchbrechungen 34 und entlang durch den sternförmigen Querschnitt des zweiten Abschnitts 28 des Ventilgliedes 20 gebildeter Strömungskanäle 44 aus dem Hydraulikfluidbehälter 10 strömen kann.

Wie bereits erwähnt, wird das Ventilglied 20 durch die Feder 22 in seine erste Stellung vorgespannt. Um das Ventilglied 20 entgegen der Federkraft in seiner zweiten Stellung zu halten, stützt sich der zweite Abschnitt 28 des Ventilgliedes 20, wie in Figur 2 angedeutet, an einem hier nicht weiter dargestellten Gehäuse eines Hauptzylinders ab. Wenn der Hydraulikfluidbehälter 10, beispielsweise durch einen Unfall, von dem Hauptzylinder getrennt wird, wird das Ventilglied 20 durch die Kraft der Feder 22 aus seiner zweiten Stellung in seine erste Stellung verschoben, wobei dann durch das Zusammenwirken der Rastelemente 32 mit den durch die untere Wandung 12 des Hydraulikfluidbehälters 10 gebildeten Anschlägen sichergestellt ist, dass das Ventilglied 20 nicht durch die Federkraft aus dem Anschlußstutzen 14 hinaus gedrückt wird.

Zur Montage des Ventilgliedes 20 in dem Anschlußstutzen 14, wird es in die Öffnung 30 des Anschlußstutzens 14 eingeführt. Dabei werden die elastischen Rastelemente 32 radial nach innen gedrückt. Aufgrund der aus der elastischen Verformung resultierenden Rückstellkräfte rasten die Rastelemente 32 in den Durchbrechungen 34 in der Seitenwandung 36 ein, sobald das Ventilglied 20 eine entsprechende Position in dem Anschlußstutzen 14 erreicht hat. Beim Einführen des Ventilgliedes 20 wird der Dichtbund 38 an dem Dichtsitz 40 vorbei geführt. Dabei tritt sowohl an dem Dichtbund 38 als auch an dem Dichtsitz 40 eine elastische Verformung auf.

In Fig. 3 ist ein Ausschnitt einer alternativen Ausführungsform des Hydraulikfluidbehälters 10 dargestellt. Statt des in Fig. 1 gezeigten, materialeinheitlich mit dem Ventilglied 20 ausgeführten Dichtbundes 38 weist das Ventilglied 20 eine O-Ringdichtung 46 auf, die abdichtend mit der Innenfläche 42 des Anschlußstutzens 14 zusammenwirkt. Ein Dichtsitz, etwa der zuvor beschriebene Dichtsitz 40, kann bei dieser Ausführungsform entfallen, da die radiale Vorspannkraft der O-Ringdichtung 46 groß genug ist, um im Zusammenwirken mit der Seitenwandung 16 eine gute Abdichtung zu erzielen.

Das in Fig. 4 gezeigte weitere Ausführungsbeispiel für ein Ventilglied 20 weist im Gegensatz zu den in den Fig. 1 bis 3 dargestellten Ventilgliedern 20 Rastelemente 32' auf, die um eine Achse schwenkbar sind, welche tangential zur Umfangsrichtung des Ventilgliedes 20 verläuft. Dies hat Vorteile bei der Montage des Ventilgliedes 20, denn die Rastelemente 32' verhalten sich beim Einführen des Ventilgliedes 20 in den Anschlußstutzen 14 wie Rampen, so dass die Rastelemente 32' durch die Einführbewegung selbst radial nach innen gedrückt werden. Der Montagevorgang erschöpft sich demnach im Platzieren der Feder 22 in dem hohlzylindrischen Abschnitt 26 des Ventilgliedes und dem darauffolgenden Einschieben des Ventilgliedes 20 samt Feder 22 in den Anschlußstutzen 14 , bis die Rastelemente 32' in den Durchbrechungen 34 verrasten.

## Patentansprüche

1. Hydraulikfluidbehälter (10) für eine hydraulische
Fahrzeugbremsanlage, mit wenigstens einem Anschlußstutzen (14), in dem ein Ventilglied (20) verschiebbar geführt ist, das in einer ersten Stellung, in die es federnd vorgespannt ist, den Anschlußstutzen (14) absperrt, und das in einer zweiten Stellung den Anschlußstutzen (14) freigibt,
**dadurch gekennzeichnet, dass**
- das Ventilglied (20) auf seiner Umfangsfläche mit wenigstens einem in Radialrichtung elastischen Rastelement (32; 32') versehen ist, und
- der Anschlußstutzen (14) in seiner inneren Seitenwandung (36) zumindest eine Ausnehmung aufweist, in die das Rastelement (32; 32') beim Einführen des Ventilgliedes (20) in den Anschlußstutzen (14) einrastet und die bezüglich der Verschieberichtung des Ventilgliedes (20) einen Anschlag bildet, der die erste Stellung des Ventilgliedes (20) festlegt.

2. Hydraulikfluidbehälter nach Anspruch 1,
**dadurch gekennzeichnet, dass** sich der Anschlußstutzen (14) in den Hydraulikfluidbehälter (10) erstreckt und der sich in dem Hydraulikfluidbehälter (10) befindende Teil (16) des Anschlußstutzens (14) im wesentlichen den gleichen Innendurchmesser hat wie ein aus dem Hydraulikfluidbehälter (10) herausragender Teil (18) des Anschlußstutzens (14), und dass die zumindest eine Ausnehmung für das wenigstens eine Rastelement (32; 32') in dem sich in dem Hydraulikfluidbehälter (10) befindenden Teil (16) des Anschlußstutzens (14) gebildet ist.

3. Hydraulikfluidbehälter nach Anspruch 2,
**dadurch gekennzeichnet, dass** das Ventilglied (20) einen ersten Abschnitt (26), in dem das zumindest eine Rastelement (32; 32') angeordnet ist, und einen zweiten Abschnitt (28) aufweist, der sich in Richtung der Öffnung (30) des Anschlußstutzens (14) erstreckt und als Betätigungsstößel für das Ventilglied (20) dient.

4. Hydraulikfluidbehälter nach Anspruch 3,
**dadurch gekennzeichnet, dass** der erste Abschnitt (26) des Ventilgliedes (20) hohlzylindrisch ist und ein Ende einer das Ventilglied (20) vorspannenden Feder (22) aufnimmt, deren anderes Ende sich an dem in dem Hydraulikfluidbehälter (10) befindenden Teil (16) des Anschlußstutzens (14) abstützt.

5. Hydraulikfluidbehälter nach Anspruch 4,
**dadurch gekennzeichnet, dass** die Feder (22) sich an einer teilweise durchbrochenen Stirnwand (24) abstützt, die ein Ende des sich in dem Hydraulikfluidbehälter (10) befindenden Teil (16) des Anschlußstutzens (14) bildet.

6. Hydraulikfluidbehälter nach Anspruch 4,
**dadurch gekennzeichnet, dass** die Feder (22) sich an einer Stirnwand (24) abstützt, die den sich in dem Hydraulikfluidbehälter (10) befindenden Teil (16) des Anschlußstutzens (14) verschließt, und dass die mit dem Rastelement (32; 32') zusammenwirkende Ausnehmung in der inneren Seitenwandung (36) des Anschlußstutzens (14) eine Durchbrechung (34) ist.

7. Hydraulikfluidbehälter nach einem der vorhergehenden Ansprüche,
**dadurch gekennzeichnet, dass** das Ventilglied (20) auf seiner Außenseite einen in Radialrichtung geringfügig vorspringenden, ringförmigen Dichtbund (38) aufweist, der in der ersten Stellung des Ventilgliedes (20) mit einem geringfügig radial nach innen ragenden, ringförmigen Dichtsitz (40) zusammenwirkt, der an der Innenfläche (42) des Anschlußstutzens (14) vorhanden ist.

8. Hydraulikfluidbehälter nach Anspruch 7,
**dadurch gekennzeichnet, dass** der ringförmige Dichtbund (38) materialeinheitlich mit dem Ventilglied (20) und der ringförmige Dichtsitz (40) materialeinheitlich mit dem Anschlußstutzen (14) ausgebildet ist.

9. Hydraulikfluidbehälter nach einem der Ansprüche 1 bis 6,
**dadurch gekennzeichnet, dass** das Ventilglied (20) auf seiner Außenseite einen in Radialrichtung geringfügig vorspringenden, ringförmigen Dichtbund aufweist, der die Innenfläche (42) des Anschlußstutzens (14) berührt, und dass der ringförmige Dichtbund durch eine O-Ringdichtung (46) gebildet ist.

10. Hydraulikfluidbehälter nach einem der Ansprüche 7 bis 9,
**dadurch gekennzeichnet, dass** der ringförmige Dichtbund (38, 46) zwischen dem ersten Abschnitt (26) und dem zweiten Abschnitt (28) des Ventilgliedes (20) angeordnet ist.

11. Hydraulikfluidbehälter nach einem der vorhergehenden Ansprüche,
**dadurch gekennzeichnet, dass** das bzw. jedes elastische Rastelement (32) durch eine am Ventilglied (20) befestigte Zunge gebildet ist, die um eine zur Mittelachse (M) des Ventilgliedes (20) parallele Achse schwenkbar ist.

12. Hydraulikfluidbehälter nach einem der Ansprüche 1 bis 10,
**dadurch gekennzeichnet, dass** das bzw. jedes elastische Rastelement (32') durch eine am Ventilglied (20) befestigte Zunge gebildet ist, die um eine Achse schwenkbar ist, welche tangential zur Umfangsrichtung des Ventilgliedes (20) verläuft.

13. Hydraulikfluidbehälter nach einem der vorhergehenden Ansprüche,
**dadurch gekennzeichnet, dass** das Ventilglied (20) ein einstückiges Kunststoffspritzgußteil ist.

## Claims

1. Hydraulic fluid container (10) for a vehicle hydraulic brake system, having at least one connecting sleeve (14) in which a valve member (20) is displaceably guided, which in a first position, into which it is spring-biased, blocks the connecting sleeve (14) and which in a second position clears the connecting sleeve (14),
**characterized in that**
- the valve member (20) on its circumferential surface is provided with at least one radially elastic detent element (32; 32'), and
- the connecting sleeve (14) in its inner side wall (36) comprises at least one recess, into which the detent element (32; 32') latches during introduction of the valve member (20) into the connecting sleeve (14) and which in relation to the direction of displacement of the valve member (20) forms a stop, which defines the first position of the valve member (20).

2. Hydraulic fluid container according to claim 1,
**characterized in that** the connecting sleeve (14) extends into the hydraulic fluid container (10) and the part (16) of the connecting sleeve (14) situated in the hydraulic fluid container (10) has substantially the same inside diameter as a part (18) of the connecting sleeve (14) projecting from the hydraulic fluid container (10), and that the at least one recess for the at least one detent element (32; 32') is formed in the part (16) of the connecting sleeve (14) situated in the hydraulic fluid container (10).

3. Hydraulic fluid container according to claim 2,
**characterized in that** the valve member (20) comprises a first portion (26), in which the at least one detent element (32; 32') is disposed, and a second portion (28), which extends in the direction of the opening (30) of the connecting sleeve (14) and acts as an actuating tappet for the valve member (20).

4. Hydraulic fluid container according to claim 3,
**characterized in that** the first portion (26) of the valve member (20) is hollow-cylindrical and receives one end of a spring (22), which biases the valve member (20) and is supported by its other end by the part (16) of the connecting sleeve (14) situated in the hydraulic fluid container (10).

5. Hydraulic fluid container according to claim 4,
**characterized in that** the spring (22) is supported by a partially breached end wall (24)forming one end of the part (16) of the connecting sleeve (14) situated in the hydraulic fluid container (10).

6. Hydraulic fluid container according to claim 4,
**characterized in that** the spring (22) is supported by an end wall (24), which closes the part (16) of the connecting sleeve (14) situated in the hydraulic fluid container (10), and that the recess in the inner side wall (36) of the connecting sleeve (14) that interacts with the detent element (32; 32') is a breach (34).

7. Hydraulic fluid container according to one of the preceding claims,
**characterized in that** the valve member (20) on its outside comprises an annular sealing collar (38), which protrudes slightly in radial direction and which in the first position of the valve member (20) interacts with an annular sealing seat (40) that projects slightly in radially inward direction and is provided at the inner surface (42) of the connecting sleeve (14).

8. Hydraulic fluid container according to claim 7,
**characterized in that** the annular sealing collar (38) and the valve member (20) are formed from a uniform material and the annular sealing seat (40) and the connecting sleeve (14) are formed from a uniform material.

9. Hydraulic fluid container according to one of claims 1 to 6,
**characterized in that** the valve member (20) on its outside comprises an annular sealing collar, which protrudes slightly in radial direction and is in contact with the inner surface (42) of the connecting sleeve (14), and that the annular sealing collar is formed by an 0-ring seal (46).

10. Hydraulic fluid container according to one of claims 7 to 9,
**characterized in that** the annular sealing collar (38, 46) is disposed between the first portion (26) and the second portion (28) of the valve member (20).

11. Hydraulic fluid container according to one of the preceding claims,
**characterized in that** the and/or each elastic detent element (32) is formed by a tongue, which is fastened to the valve member (20) and pivotable about an axis parallel to the centre line (M) of the valve member (20).

12. Hydraulic fluid container according to one of claims 1 to 10,
**characterized in that** the and/or each elastic detent element (32') is formed by a tongue, which is fastened to the valve member (20) and pivotable about an axis, which extends tangentially relative to the circumferential direction of the valve member (20).

13. Hydraulic fluid container according to one of the preceding claims,
**characterized in that** the valve member (20) is a one-piece plastic injection moulded part.

## Revendications

1. Réservoir de fluide hydraulique (10) pour une installation de freinage hydraulique pour véhicule, comprenant au moins une tubulure de raccordement (14) dans laquelle est guidé mobile en translation un élément de soupape (20) qui ferme la tubulure de raccordement (14) dans une première position, dans laquelle il est précontraint élastiquement, et qui dégage la tubulure de raccordement (14) dans une seconde position,
**caractérisé en ce**
- l'élément de soupape (20) est muni sur sa surface périphérique d'au moins un élément d'encliquetage (32 ; 32') qui est élastique dans la direction radiale, et
- la tubulure de raccordement (14) présente dans sa paroi latérale inférieure (36) au moins un évidement dans lequel l'élément d'encliquetage (32 ; 32') s'encliquette lors de l'introduction de l'élément de soupape (20) dans la tubulure de raccordement (14), et qui forme une butée relativement à la direction de la translation de l'élément de soupape (20), butée qui fixe la première position de l'élément de soupape (20).

2. Réservoir de fluide hydraulique selon la revendication 1,
**caractérisé en ce que** la tubulure de raccordement (14) se prolonge dans le réservoir de fluide hydraulique (10) et la partie (16) de la tubulure de raccordement (14) qui se trouve dans le réservoir de fluide hydraulique (10) a sensiblement le même diamètre intérieur qu'une partie (18) de la tubulure de raccordement (14) qui émerge du réservoir de fluide hydraulique (10), et **en ce que** l'au moins un évidement prévu pour l'au moins un élément d'encliquetage (32 ; 32') est formé dans la partie (16) de la tubulure de raccordement (14) qui se trouve dans le réservoir de fluide hydraulique (10).

3. Réservoir de fluide hydraulique selon la revendication 2,
**caractérisé en ce que** l'élément de soupape (20) présente un premier segment (26) dans lequel l'au moins un élément d'encliquetage (32 ; 32') est disposé et un second segment (28) qui s'étend en direction de l'ouverture (30) de la tubulure de raccordement (14) et sert de poussoir d'actionnement pour l'élément de soupape (20).

4. Réservoir de fluide hydraulique selon la revendication 3,
**caractérisé en ce que** le premier segment (26) de l'élément de soupape (20) est cylindrique et creux et reçoit une extrémité d'un ressort (22) qui précontraint l'élément de soupape (20), tandis que son autre extrémité prend appui contre la partie (16) de la tubulure de raccordement (14) qui se trouve dans le réservoir de fluide hydraulique (10).

5. Réservoir de fluide hydraulique selon la revendication 4,
**caractérisé en ce que** le ressort (22) prend appui contre une paroi frontale (24) partiellement ajourée qui forme une extrémité de la partie (16) de la tubulure de raccordement (14) qui se trouve dans le réservoir de fluide hydraulique (10).

6. Réservoir de fluide hydraulique selon la revendication 4,
**caractérisé en ce que** le ressort (22) prend appui contre une paroi frontale (24) qui ferme la partie (16) de la tubulure de raccordement (14) qui se trouve dans le réservoir de fluide hydraulique (10) et **en ce que** l'évidement de la paroi latérale intérieure (36) de la tubulure de raccordement (14) qui coopère avec l'élément d'encliquetage (32 ; 32') est un ajour (34).

7. Réservoir de fluide hydraulique selon une des revendications précédentes,
**caractérisé en ce que** l'élément de soupape (20) présente sur son côté extérieur une nervure d'étanchéité annulaire (38) qui fait légèrement saillie dans la direction radiale et qui, dans la première position de l'élément de soupape (20), coopère avec un siège de portée étanche annulaire (40) prévu sur la surface intérieure (42) de la tubulure de raccordement (14) et qui fait légèrement saillie radialement vers l'intérieur.

8. Réservoir de fluide hydraulique selon la revendication 7,
**caractérisé en ce que** la nervure d'étanchéité annulaire (38) est réalisée uniformément avec l'élément de soupape (20) et le siège de portée étanche annulaire (40) est réalisé uniformément avec la tubulure de raccordement (14).

9. Réservoir de fluide hydraulique selon une des revendications 1 à 6,
**caractérisé en ce que** l'élément de soupape (20) présente sur son côté extérieur une nervure d'étanchéité annulaire qui fait légèrement saillie dans la direction radiale et qui touche la surface intérieure (42) de la tubulure de raccordement (14) et **en ce que** la nervure d'étanchéité annulaire est constituée par une bague torique d'étanchéité (46).

10. Réservoir de fluide hydraulique selon une des revendications 7 à 9,
**caractérisé en ce que** la nervure d'étanchéité annulaire (38, 46) est disposée entre le premier segment (26) et le second segment (28) de l'élément de soupape (20).

11. Réservoir de fluide hydraulique selon une des revendications précédentes,
**caractérisé en ce que** l'élément, ou chaque élément, d'encliquetage élastique (32) est formé d'une languette fixée à l'élément de soupape (20) et qui peut pivoter autour d'un axe parallèle à l'axe médian (M) de l'élément de soupape (20).

12. Réservoir de fluide hydraulique selon une des revendications 1 à 10,
**caractérisé en ce que** l'élément ou chaque élément d'encliquetage élastique (32') est formé d'une languette fixée à l'élément de soupape (20) et qui peut pivoter autour d'un axe qui s'étend tangentiellement à la direction circonférentielle de l'élément de soupape (20).

13. Réservoir de fluide hydraulique selon une des revendications précédentes,
**caractérisé en ce que** l'élément de soupape (20) est une pièce de matière plastique moulée par injection d'un seul tenant.
